# EUROPEAN PATENT SPECIFICATION

(11) **EP 3 077 190 B1**
(45) Date of publication and mention of the grant of the patent: **22.03.2023**
(21) Application number: 14838809.3
(22) Date of filing: 02.12.2014
(51) Int. Cl.: B29D 35/00, B29D 35/10, B29D 35/12, B29D 35/14

(54) **FIXTURE FOR MOLDING THERMOPLASTIC AND THERMOSETTING POLYMERS, ELASTOMERS AND REACTIVE MIXTURES, IN PARTICULAR FOR PRODUCING FOOTWEAR**
EINRICHTUNG ZUR FORMUNG THERMOPLASTISCHER UND WÄRMEHÄRTENDER POLYMERE, ELASTOMERE UND REAKTIVER GEMISCHE, INSBESONDERE ZUR HERSTELLUNG VON SCHUHEN
ACCESSOIRE FIXE DE MOULAGE DE POLYMÈRES THERMOPLASTIQUES ET THERMODURCISSABLES, D'ÉLASTOMÈRES ET DE MÉLANGES RÉACTIFS, EN PARTICULIER POUR LA FABRICATION DE CHAUSSURE

(30) Priority: 04.12.2013 IT RM20130668
(43) Date of publication of application: 12.10.2016
(73) Proprietor: Wintech S.R.L., 30030 Mellaredo di Pianiga (VE) (IT)
(72) Inventor: MIOTTO, Alfonso, 30030 Mellaredo di Pianiga (VE) (IT)
(74) Representative: Garavelli, Paolo
(86) International application number: PCT/IT2014/000320
(87) International publication number: WO 2015/083191

(56) References cited:
- AT-B- 353 142
- FR-A- 1 398 910
- FR-A1- 2 881 678
- GB-A- 394 564
- GB-A- 1 253 333

## Description

The present invention relates to a fixture for molding thermoplastic and thermosetting polymers, elastomers and reactive mixtures, in particular for producing footwear, suitable to be used on carousel-type plants.

There are a great variety of pieces molded in plastic material, both thermosetting and thermoplastic material, which, due to technologic needs, require the use of carousel-type plants, in particular for footwear, in which various materials coexist, even of a rather different nature one from the other. In fact, the sole is usually made of thermoplastic material and polyurethanes, while the vamp can be made of very different materials one from the other, such as cloth, hide, leather, PVC reinforced with cloth, etc. The connection between vamp and sole is usually performed through injection of reactive mixtures, normally made of thermosetting polyurethane.

This type of footwear is usually made of carousel-type plants, comprising a plurality of stations, in each one of which a working is performed.

Used fixtures therefore are of a suitable type both for high-pressure molding of thermoplastic polymers, and for low-pressure injection of reactive mixtures. The plant therefore comprises injectors both for thermoplastics, and for reactive mixtures.

The operations which are performed to obtain a shoe are generally the following.

First of all, the tread sole is formed by injecting or casting with open mold a thermoplastic polymer / elastomer, said sole being able to be made of various materials, even with different colors. Then, the vamp is placed on a suitable form, which is placed on the sole, leaving a suitable hollow space which is filled by a reactive mixture, which generates the adhesion of the vamp to the tread and thereby composes the sole. Contouring and finishing operations follow.

Each one of said operations is performed in a suitable station of the carousel-type plant and the fixture is automatically configured to execute the operation itself.

What has been described in general above is the procedure usually employed for producing footwear. Said procedure provides for operation to be manually performed by responsible personnel. Said operations substantially comprise the insertion of the vamp onto the form, the extraction of the finished shoe, the cleaning of the mold and the application of a suitable detaching agent. In prior art plants, said operations are strongly impaired by the fixture arrangement and therefore slow down the activity with consequent loss of production.

The above problem occurs particularly in the station in which the mold used for injecting the reactive mixture is cleaned and treated with a detaching agent, since the prior art provides for moving a pair of half-rings for making recesses in which the reactive mixture which joins the vamp to the tread is injected. According to the prior art, in fact, the two half-rings move on guides obtained inside a sort of "box" which also contains the actuators, with limited opposed parallel stroke. Such stroke limitation derives from the overall limits of the box and from the fact that closing of the half-rings occurs with a toggle mechanism. This limited opening impairs the access to the mold by the operator, with consequent increase of the necessary time to perform the operation, and therefore with related loss of production.

Patent FR1398910 discloses a plant for molding polymeric materials, in particular for making footwear. Said plant comprises a pair di half-rings which are closed with a horizontal movement, said half-rings being assembled on a pair di arms rotating around a substantially vertical axis.

However, the fixture disclosed in FR1398910 does not deal with the technical problem solved by the present invention, since closing of the arms is obtained through a mechanism which is placed immediately in front of the opening of the two half-rings, thereby impairing the operations performed by responsible personnel.

Patent GB1253333 discloses a fixture in which there are a pair of arms rotating around a substantially vertical axis. Said arms are kept closed by a pair of elements which have a retention function, namely for keeping the arms in a closing position, contrasting the thrust due to the injection pressure of the reactive mixture. When the arms are opened, these two elements are placed outside the front encumbrance of the two arms, and therefore allow accessing the internal part of the molds; however, when the worker responsible for cleaning the molds moves forward to reach the furthest part of the mold, he abuts with his thorax against these closing elements, which, actually extend the arms themselves and impair the access to the mold.

The document FR 2881678 A for example discloses a fixture suitable to be used in a carousel type plant, and in accordance with the preamble of independent claim 1.

The present invention provides for a fixture, as claimed in claim 1, which allows an easy access to the mold, allowing a quick execution of cleaning and detaching agent application operations. This fixture is of the type which provides for a pair of half-rings, which are closed by performing a horizontal movement, and wherein these half-rings are assembled on a pair di arms, rotating around a substantially vertical axis, which perform a rotary movement, means being provided which are adapted to generate the rotary movement of said arms. In this way, the half-rings and the related handling means are not contained any more inside bulky "boxes", but are placed on suitable arms which, by being opened, leave completely free the access to the half-rings by the operator.

The use of a fixture according to the invention therefore allows more easily and quickly performing the operations of cleaning the mold and applying the detaching agent. An increase of the production, and also of the quality, follows, in addition to the reduction of scraps, since the chance for the operator to more easily access the parts to be treated, allows performing the operation with better care.

The invention will now be described, as a nonlimiting example, according to a preferred embodiment thereof and with reference to the enclosed drawings, in which:
- figure 1 is an axonometric view of the fixture according to the invention;
- figures 2, 3 and 4 show the sequence of movements performed by the fixture for closing the mold.

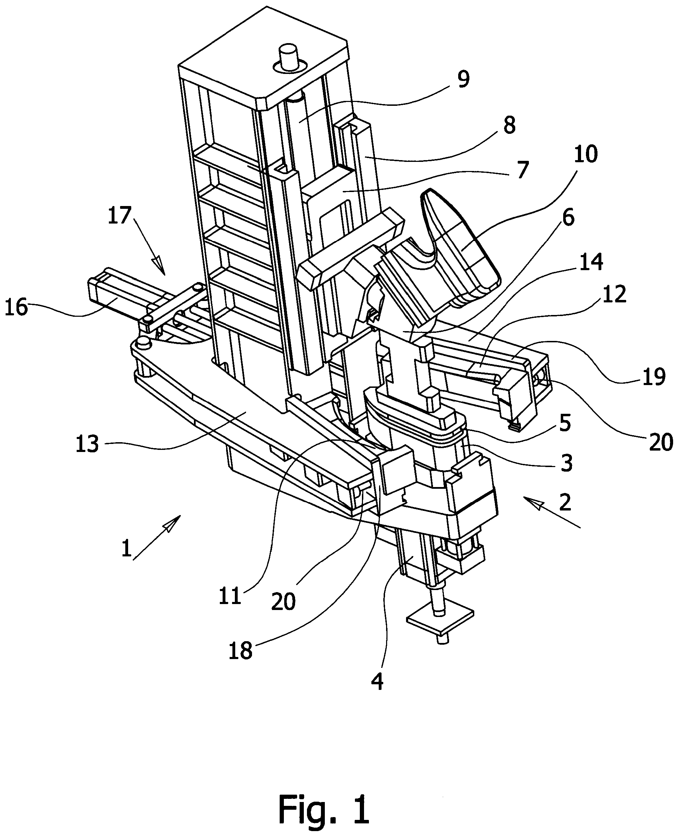

With reference to figure 1, (1) designates a fixture for producing footwear according to the invention, comprising a mold (2) adapted to be composed and means adapted to move the parts which compose said mold (2).

The mold (2) comprises a lower half-mold (3), handled by an hydraulic or pneumatic actuator (4), and an upper half-mold (5), assembled on a rotating turret (6), in turn handled by a mechanical system comprising a slide (7) which slides on a pair of guides (8) and actuated by a screw (9). This part of the fixture is known and will not be further described.

The sole is produced through injection / casting of the thermoplastic polymer inside the recess included between the two half-molds (3) and (5).

After having produced the sole, the upper half-mold (5) is lifted and the rotating turret brings a form (10), on which the vamp is placed, next to the sole itself, while the two half-rings (11) and (12) are closed in order to obtain the recess in which the reactive mixture will be injected, whose purpose is stably connecting the vamp to the sole and composing the edge of the show.

These half-rings (11) and (12) are assembled on a pair of arms (13) and (14), pivoting around a pin (15), on a substantially vertical axis, and actuated by an actuator (16), since known means are provided, for example a "toggle" mechanism (17), adapted to ensure the retention of the arms in a closing position.

According to the invention, said pin (15) is advantageously placed in the rear part of the fixture, namely the one oriented towards the center of the carousel, since the overall sizes of the actuator (16) and of the toggle mechanism (17) do not create problems. However, other configurations are also possible, for example with other positions of the rotation pin, or with a rotation pin for each arm, possibly with other actuating means. What matters, in order to make it easy to access the half-rings (11) and (12), is that they are handled by means which have no front encumbrance, namely on the operator's part.

Between said half-rings (11) and (12) and said arms (13) and (14) plates (18) and (19) and a plurality of actuators (20) are arranged, which have a stroke of a few millimeters (for example less than 10 mm) and have the purpose of performing the tightening of the half-rings (11) and (12).

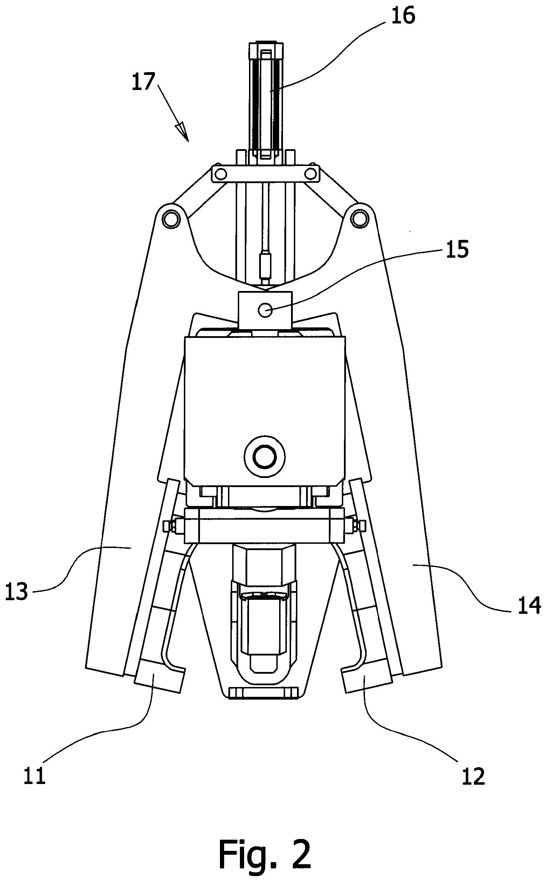

Figures 2, 3 and 4 show in plant view the mechanism for closing the mold for injecting the reactive mixture. The figures themselves also show the sequence of movements performed to obtain said closure.

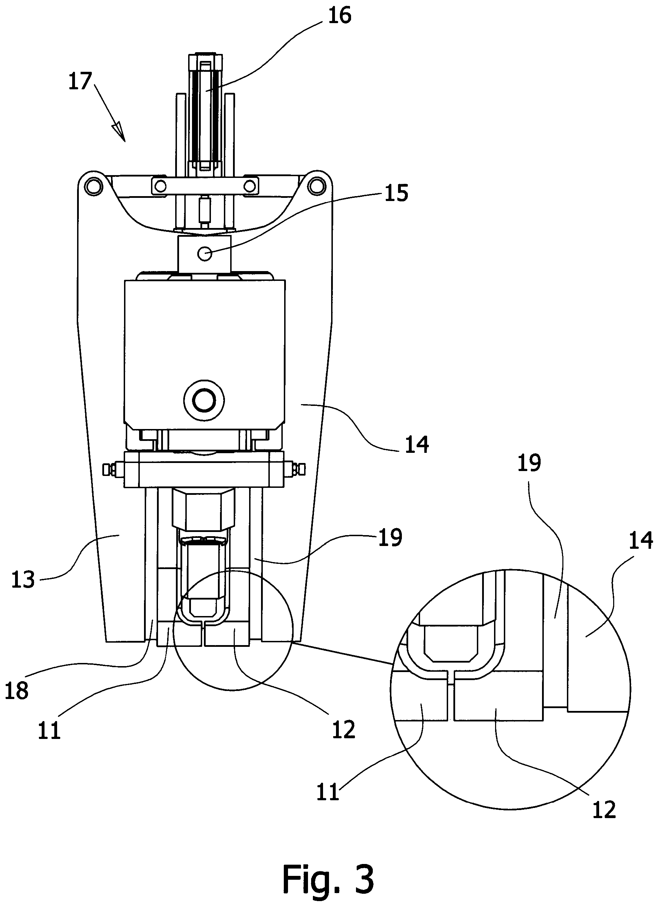

As can be seen in figure 2, its half-rings (11) and (12), being assembled on the arms (13) and (14) which are pivoting around the pin (15), perform the approaching stroke by moving on a circular trajectory, while it is preferred that the last section of the closing stroke occurs along a rectilinear trajectory in order not to damage the vamp assembled on the form. For this reason, as shown in figure 3, at the end of the rotation of the arms (13) and (14), the two half-rings (11) and (12) are not yet in contact, as clearly shown in the enlarged part of figure 3.

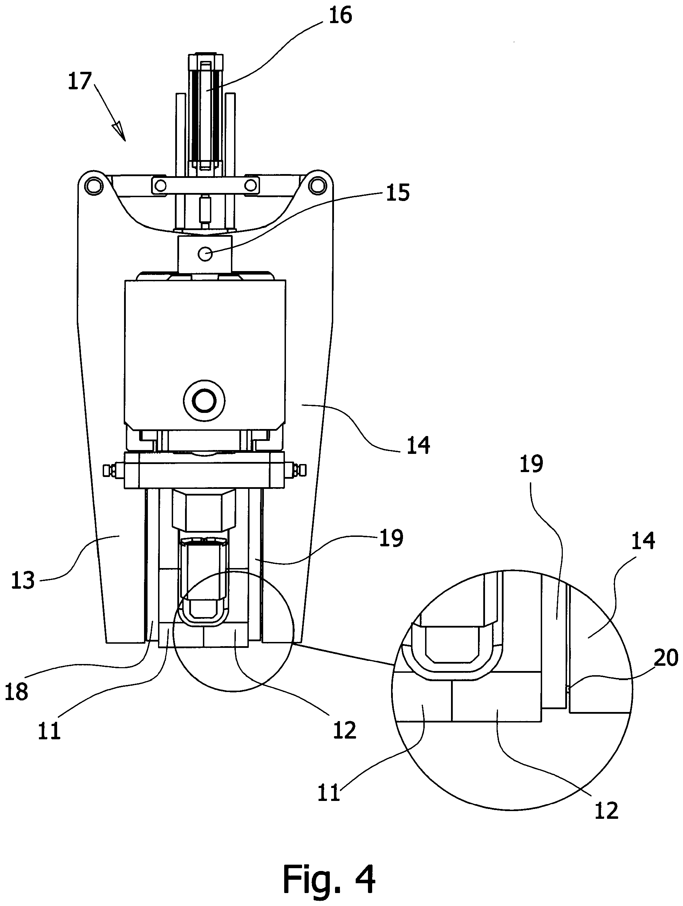

At the end of the rotation of the arms (13) and (14), its half-rings (11) and (12) are faced to the mold and must perform a rectilinear stroke by a few millimeters to obtain the closure of the mold itself. At that time, the actuators (20) are actuated and perform the closing stroke, as shown in figure 4, in which, through the slit between the arms (13, 14) and the plates (18, 19), the stems of said actuators (20) are visible.

As can be seen from the attached figures, particularly figure 1, the two half-rings (11) and (12) are perfectly accessible by the operator and, therefore, can be easily cleaned and treated with a detaching agent, with a strong saving of time and better care in performing the operations. What is stated above is translated into an increase of productivity and in a reduction of scraps.

## Claims

1. Fixture (1) for molding thermoplastic and thermosetting polymers, elastomers and reactive mixtures, in particular for producing footwear, of the type which provides for a pair of half-rings (11, 12), positioned on a pair of arms (13, 14), which are closed by performing a horizontal movement, and retention means (17), adapted to keep said half rings (11, 12) in their closed position, by opposing the thrust due to the injection pressure of said thermoplastic and thermosetting polymers, said fixture (1) being suitable to be used in carousel-type plant, wherein said half-rings (11, 12) are assembled on a pair of arms (13, 14), which can rotate around a pin (15) with a substantially vertical axis, means (16) being provided which are adapted to generate said rotary movement of said arms (13, 14), said retention means (17) and said means (16), adapted to generate said rotary movement of said arms (13, 14), being placed in the rear part of said fixture (1) oriented towards a centre of said carousel, **characterized in that** means (18, 19, 20) are provided to perform a rectilinear stroke of said half-rings (11, 12) to complete the closing of the mold.

2. Fixture (1) for molding thermoplastic and thermosetting polymers, elastomers and reactive mixtures according to claim 1, **characterized in that** said retention means (17), placed in the rear part of said fixture (1) oriented towards a centre of said carousel, comprise a toggle mechanism.

3. Fixture (1) for molding thermoplastic and thermosetting polymers, elastomers and reactive mixtures according to claim 1, **characterized in that** said arms (13, 14) are pivoting around a pin (15), placed in the rear part of said fixture (1).

4. Fixture (1) for molding thermoplastic and thermosetting polymers, elastomers and reactive mixtures according to claim 1, **characterized in that** said means adapted to generate said rotary movement of said arms (13, 14), comprise an actuator (16) which acts on said arms (13, 14) through said toggle mechanism (17) which ensures the retention of the arms in their closing position.

5. Fixture (1) for molding thermoplastic and thermosetting polymers, elastomers and reactive mixtures according to claim 1, **characterized in that** said means (18, 19, 20), to perform a rectilinear stroke of said half-rings (11, 12), comprise plates (18, 19) interposed between said half-rings (11, 12) and said arms (13, 14), and a plurality of actuators (20), said actuators (20) having the function of tightening said half-rings (11, 12) by performing a rectilinear stroke.

6. Fixture (1) for molding thermoplastic and thermosetting polymers, elastomers and reactive mixtures according to claim 5, **characterized in that** said rectilinear stroke of the half-rings (11, 12), performed by said actuators (20), is less than 10 mm.

## Patentansprüche

1. Vorrichtung (1) zum Formen von thermoplastischen und duroplastischen Polymeren, Elastomeren und reaktiven Mischungen, insbesondere für die Herstellung von Schuhen, der Art, die ein Paar Halbringe (11, 12) vorsieht, die auf einem Paar Armen (13, 14), die sich durch Ausführen einer horizontalen Bewegung schließen, und Haltemitteln (17), die in der Lage sind, die Halbringe (11, 12) in der geschlossenen Position zu halten, wobei sie dem Druck entgegenwirken, der durch den Einspritzdruck der thermoplastischen Polymere und entsteht aus wärmehärtbaren Materialien, wobei die Vorrichtung (1) geeignet ist, in einer Karussellanlage verwendet zu werden, in der die Halbringe (11, 12) an einem Paar Armen (13, 14) angebracht sind, die sich um a drehen können Stift (15) mit im wesentlichen vertikaler Achse, wobei Mittel (16) vorgesehen sind, die geeignet sind, die Drehbewegung der Arme (13, 14) zu bewirken, die Haltemittel (17) und die Mittel (16), die geeignet sind, die Drehbewegung zu bewirken der Arme (13, 14) sind oder im hinteren Teil der Halterung (1) orientiert zur Mitte des Karussells angeordnet ist, **dadurch gekennzeichnet, dass** Mittel (18, 19, 20) vorgesehen sind, um einen geraden Hub der Halbringe (11, 12) auszuführen vervollständigen das Schließen der Form.

2. Vorrichtung (1) zum Formen von thermoplastischen und duroplastischen Polymeren, Elastomeren und reaktiven Mischungen nach Anspruch 1, **dadurch gekennzeichnet, dass** die Haltemittel (17) im hinteren Teil der Vorrichtung (1) angeordnet sind, der zur Mitte des Karussells ausgerichtet ist , umfassen einen Kniehebelmechanismus.

3. Vorrichtung (1) zum Formen von thermoplastischen und duroplastischen Polymeren, Elastomeren und reaktiven Mischungen nach Anspruch 1, **dadurch gekennzeichnet, dass** die Arme (13, 14) um einen Stift (15) geschwenkt werden, der im hinteren Teil der Vorrichtung positioniert ist (1).

4. Anlage (1) zum Formen von thermoplastischen und duroplastischen Polymeren, Elastomeren und reaktiven Mischungen nach Anspruch 1, **dadurch gekennzeichnet, dass** die Mittel, die in der Lage sind, die Drehbewegung der Arme (13, 14) zu bewirken, einen Aktuator (16) umfassen, der wirkt auf die Arme (13, 14) durch den Kniehebelmechanismus (17), der sicherstellt, dass die Arme in der geschlossenen Position gehalten werden.

5. Vorrichtung (1) zum Formen von thermoplastischen und duroplastischen Polymeren, Elastomeren und reaktiven Mischungen nach Anspruch 1, **dadurch gekennzeichnet, dass** die Mittel (18, 19, 20) zum Ausführen eines geradlinigen Hubs der Halbringe (11, 12), umfassen Platten (18, 19), die zwischen den Halbringen (11, 12) und den Armen (13, 14) angeordnet sind, und eine Vielzahl von Betätigungselementen (20), wobei die Betätigungselemente (20) die Funktion haben, die Halbringe (11, 12) festzuziehen. Ringe (11, 12), die einen geraden Hub ausführen.

6. Vorrichtung (1) zum Formen von thermoplastischen und duroplastischen Polymeren, Elastomeren und reaktiven Mischungen nach Anspruch 5, **dadurch gekennzeichnet, dass** der geradlinige Hub der Halbringe (11, 12), der von den Betätigungselementen (20) ausgeführt wird, kleiner ist als 10mm.

## Revendications

1. Equipement (1) pour le moulage de polymères thermoplastiques et thermodurcissables, d'élastomères et de mélanges réactifs, notamment pour la fabrication de chaussures, du type qui prévoit une paire de demi-anneaux (11,12), positionnés sur une paire de bras (13, 14), qui se ferment en effectuant un mouvement horizontal, et des moyens de retenue (17), aptes à maintenir lesdits demi-anneaux (11, 12) en position fermée, s'opposant à la poussée due à la pression d'injection desdits polymères thermoplastiques et matériaux thermodurcissables, ledit montage (1) pouvant être utilisé dans une installation de type carrousel, dans laquelle lesdits demi-anneaux (11, 12) sont montés sur une paire de bras (13, 14), qui peuvent tourner autour d'un goupille (15) d'axe sensiblement vertical, des moyens (16) étant prévus aptes à provoquer ledit mouvement de rotation desdits bras (13, 14), lesdits moyens de retenue (17) et lesdits moyens (16), aptes à provoquer ledit mouvement de rotation desdits bras (13, 14), étant ou placé dans la partie arrière dudit bâti (1) orienté vers le centre dudit carrousel, **caractérisé en ce que** des moyens (18, 19, 20) sont prévus pour effectuer une course rectiligne desdites demi-bagues (11, 12) pour terminer la fermeture du moule.

2. Equipement (1) pour le moulage de polymères thermoplastiques et thermodurcissables, d'élastomères et de mélanges réactifs selon la revendication 1, **caractérisé en ce que** lesdits moyens de retenue (17), placés dans la partie arrière dudit équipement (1) orientés vers le centre dudit carrousel , comportent un mécanisme à genouillère.

3. Equipement (1) pour le moulage de polymères thermoplastiques et thermodurcissables, d'élastomères et de mélanges réactifs selon la revendication 1, **caractérisé en ce que** lesdits bras (13, 14) sont articulés autour d'un axe (15), positionné dans la partie arrière dudit équipement (1).

4. Equipement (1) pour le moulage de polymères thermoplastiques et thermodurcissables, d'élastomères et de mélanges réactifs selon la revendication 1, **caractérisé en ce que** lesdits moyens, aptes à provoquer ledit mouvement de rotation desdits bras (13, 14), comprennent un actionneur (16) qui agit sur lesdits bras (13, 14) par l'intermédiaire dudit mécanisme à genouillère (17) qui assure le maintien des bras en position fermée.

5. Equipement (1) pour le moulage de polymères thermoplastiques et thermodurcissables, d'élastomères et de mélanges réactifs selon la revendication 1, **caractérisé en ce que** lesdits moyens (18, 19, 20) pour effectuer une course rectiligne desdites demi-bagues (11, 12), comportent des plaques (18, 19) interposées entre lesdites demi-bagues (11, 12) et lesdits bras (13, 14), et une pluralité d'actionneurs (20), lesdits actionneurs (20) ayant pour fonction de serrer ladite demi-bague anneaux (11, 12) effectuant une course droite.

6. Equipement (1) pour le moulage de polymères thermoplastiques et thermodurcissables, d'élastomères et de mélanges réactifs selon la revendication 5, **caractérisé en ce que** ladite course rectiligne des demi-anneaux (11, 12), effectuée par lesdits actionneurs (20), est inférieure à 10 mm.
